# EUROPÄISCHE PATENTSCHRIFT

(11) **EP 0 972 209 B1**
(45) Veröffentlichungstag und Bekanntmachung des Hinweises auf die Patenterteilung: **24.07.2002**
(21) Anmeldenummer: 98929200.8
(22) Anmeldetag: 07.04.1998
(51) Int. Cl.: G01S 1/04, G01C 21/16

(54) **ORTUNGSVORRICHTUNG FÜR FAHRZEUGE**
LOCATING DEVICE FOR VEHICLES
DISPOSITIF DE LOCALISATION POUR VEHICULES

(30) Priorität: 09.04.1997 DE 19714600
(43) Veröffentlichungstag der Anmeldung: 19.01.2000
(73) Patentinhaber: ROBERT BOSCH GMBH, 70442 Stuttgart (DE)
(72) Erfinder: BODE, Friedrich-Wilhelm, D-31552 Apelern (DE); TANNEBERGER, Volkmar, D-31139 Hildesheim (DE)
(86) Internationale Anmeldenummer: DE9800981
(87) Internationale Veröffentlichungsnummer: WO9845724

(56) Entgegenhaltungen:
- EP-A- 0 735 380
- DE-A- 4 204 164
- US-A- 5 257 195
- PATENT ABSTRACTS OF JAPAN vol. 097, no. 006, 30. Juni 1997 & JP 09 049729 A (HITACHI LTD;HITACHI KEIYO ENG CO LTD), 18. Februar 1997

## Beschreibung

Die Erfindung betrifft eine Fahrzeugs-Ortungsvorrichtung für Fahrzeuge mit einem an eine Antenne angeschlossenen Satellitenempfänger zum Empfang und zur Auswertung von von mehreren Satelliten abgestrahlten Sendesignalen, mit zusätzlichen Sensoren für die Erfassung der Bewegung des Fahrzeugs und mit einem Koppelrechner zur gemeinsamen Auswertung der Sendesignale der Satelliten und der Sensorsignale zur Ermittlung der aktuellen Positionsdaten. EP-A-735 380 offerbart eine Ortungsvorrichtung für Fahrzeuge dieser Art.

Derartige Ortungsvorrichtungen für Fahrzeuge sind bekannt und werden insbesondere als Teil von Navigationssystemen für Land-, Luft- und Wasserfahrzeuge eingesetzt. Für bekannte Navigationssysteme für Kraftfahrzeuge wird eine Antenne zum Empfang der von den Satelliten abgestrahlten Sendesignale an der Außenseite des Kraftfahrzeugs angeordnet und die empfangenen Signale über abgeschirmte Leitungen auf den zugehörigen Empfänger geleitet. Der Empfänger ist regelmäßig Teil eines Navigationsgeräts, in dem die umfangreichen Daten für die Navigation, wie Landkarten, Straßeninformationen usw. abrufbar sind. Die aktuellen Positionsdaten ermöglichen eine zutreffende Ausgabe von Navigationsinformationen aufgrund der abrufbaren Navigationsdaten. Die Ausgabe der Navigationsinformationen erfolgt regelmäßig als Sprachausgabe und zusätzlich durch Symbole und Wiedergabe von Fahrbefehlen auf einem eigenen Display.

Die Verwendung der zusätzlichen Sensoren erfolgt, um die aktuelle Positionsbestimmung mit einer höheren Genauigkeit und höheren Verfügbarkeit zu ermöglichen als durch die Satellitennavigation für zivile Anwendungen erzielbar ist. Die zusätzlichen Sensoren haben dabei die Funktion, im Nahbereich Ortsbestimmungen mit einer hohen Präzision zu ermöglichen, wenn eine Ausgangs-Ortsinformation vorliegt. Bei der Zurücklegung großer Strecken hingegen addieren sich die unvermeidbaren Fehler der Ausgangssignale der zusätzlichen Sensoren. Die Satellitennavigation, die für zivile Anwendungen eine Genauigkeit von Ortsbestimmungen in einem Bereich von ca. 100 m erlaubt, ist daher in der Lage, zur Korrektur der Ortsbestimmung durch die zusätzlichen Sensoren im Fernbereich herangezogen zu werden.

Es war naheliegend, als zusätzliche Sensoren die im Kraftfahrzeug befindlichen Radsensoren für eine automatische Bremssteuerung auszunutzen.

Für die Installation eines Navigationssystems ist es daher erforderlich, die Ausgangssignale der Radsensoren und etwaiger weiterer Sensoren auszuwerten und hieraus eine Position zu bestimmen. Die so ermittelten Positionsdaten werden dem Koppelrechner zusammen mit den aus den Satelliten-Sendesignalen ermittelten Positionsdaten zugeleitet und in einer komplizierten Weise zur Ausnutzung der Bestimmung der aktuellen Position ausgewertet.

Zur wünschenswerten Verbesserung der Genauigkeit der durch die Satellitensignale ermittelten Positionsdaten werden differentielle Korrekturdaten im UKW-Bereich ausgesandt, die mit Hilfe einer entsprechenden Antenne empfangen und mittels eines zugehörigen Empfängers ausgewertet werden können.

Die Installation eines bekannten Navigationssystems erfordert daher die Anbringung der erforderlichen Antenne bzw. Antennen, die Implementierung der zugehörigen Empfänger in einem Gerät im Innenraum des Fahrzeugs und die Abnahme von Sensorsignalen aus dem Fahrzeugsystem, beispielsweise von Radsensoren eines Systems zur automatischen Bremssteuerung (ABS). Der hiermit verbundene Aufwand ist hoch, so daß Navigationssysteme in Fahrzeugen derzeit sehr kostenaufwendig sind.

Der Erfindung liegt daher die Problemstellung zugrunde, eine preiswertere Ausbildung von Ortungsvorrichtungen für Fahrzeuge zu ermöglichen.

Ausgehend von dieser Problemstellung ist erfindungsgemäß eine Ortungsvorrichtung für Fahrzeuge der eingangs erwähnten Art dadurch gekennzeichnet, daß die zusätzlichen Sensoren vom Fahrzeugsystem unabhängige Sensoren sind und daß der Satellitenempfänger mit seiner Antenne, mit den zusätzlichen Sensoren und dem Koppelrechner in einem eigenen Gehäuse angeordnet ist, das einen Anschluß für eine Versorgungspannung und eine Schnittstelle aufweist, über die die Positionsdaten übertragbar sind.

Die erfindungsgemäße Ortungsvorrichtung beruht auf einem neuen Konzept, bei dem die komplette Ortungsvorrichtung zur Erstellung der aktuellen Positionsdaten in einem eigenen Gehäuse untergebracht ist und vom Fahrzeugsystem bezüglich der Ortungsfunktion unabhängig ist. Dies erlaubt eine sehr einfache Installation der erfindungsgemäßen Ortungsvorrichtung, insbesondere für den Fall der Nachrüstung. Abgesehen von der Stromversorgung ist lediglich eine Schnittstelle erforderlich, über die die Positionsdaten von der Ortungsvorrichtung zu einer im Fahrzeuginneren befindlichen Navigationseinrichtung übertragbar sind, ggf. aber auch Daten auf die Ortungsvorrichtung übertragen werden können, beispielsweise um diese zu initialisieren.

Die erfindungsgemäße Ortungsvorrichtung erlaubt somit die Realisierung eines kostengünstigen Konzeptes, bei dem die komplette Ortungsfunktion durch die erfindungsgemäße Ortungsvorrichtung ausgeführt wird und die ermittelten aktuellen Positionsdaten auf einen mit den Navigationsinformationen gefütterten Rechner im Fahrzeuginnern geleitet werden, der aufgrund der aktuellen Positionsdaten die Navigationsempfehlungen erstellt. Erfindungsgemäß kann der im Fahrzeug befindliche Rechner ein Standardrechner, beispielsweise ein Laptop in einer besonderen Halterung, sein, der nicht ständig installiert sein muß. Es ist somit möglich, die Installation im Fahrzeuginnern und den hierfür benötigten Platzbedarf minimal zu halten.

Ein weiterer Vorteil des erfindungsgemäßen Konzepts besteht darin, daß die von der Antenne bzw. den Antennen empfangenen Signale ohne lange Leitungen sofort verarbeitet werden. Durch die Anordnung des Satellitenempfängers und der zusätzlichen Sensoren in demselben Gehäuse ist es ferner möglich, mit demselben Prozessor die jeweiligen Rohdaten auszuwerten, wodurch erhebliche Vereinfachungen möglich sind. Es ist daher nicht erforderlich, jeweils die durch die Satellitenortung und die zusätzlichen Sensoren bestimmbaren Positionsdaten erst zu errechnen und dann zu koppeln. Vielmehr ist es möglich, die Kopplung vor der Auswertung der Rohdaten zu Positionsdaten vorzunehmen.

In einer besonders bevorzugten Ausführungsform der Erfindung ist das Gehäuse zur Anbringung an der Außenseite des Fahrzeugs ausgebildet, insbesondere für eine Dachmontage vorgesehen.

In die erfindungsgemäße Ortungsvorrichtung kann zwanglos ein komplettes Gerät - einschließlich Antenne - für die Auswertung differentieller Korrekturdaten für die Satellitenortung integriert werden.

Die Erfindung soll im folgenden anhand von in der Zeichnung dargestellten Ausführungsbeispielen näher erläutert werden. Es zeigen:
- Figur 1 -: ein Blockschaltbild eines ersten Ausführungsbeispiels einer erfindungsgemäßen Ortungsvorrichtung
- Figur 2 -: ein Blockschaltbild einer zweiten Ausführungsform der erfindungsgemäßen Ortungsvorrichtung
- Figur 3 -: die Anordnung einer erfindungsgemäßen Ortungsvorrichtung in einem eigenen Gehäuse auf dem Dach eines Kraftfahrzeugs.

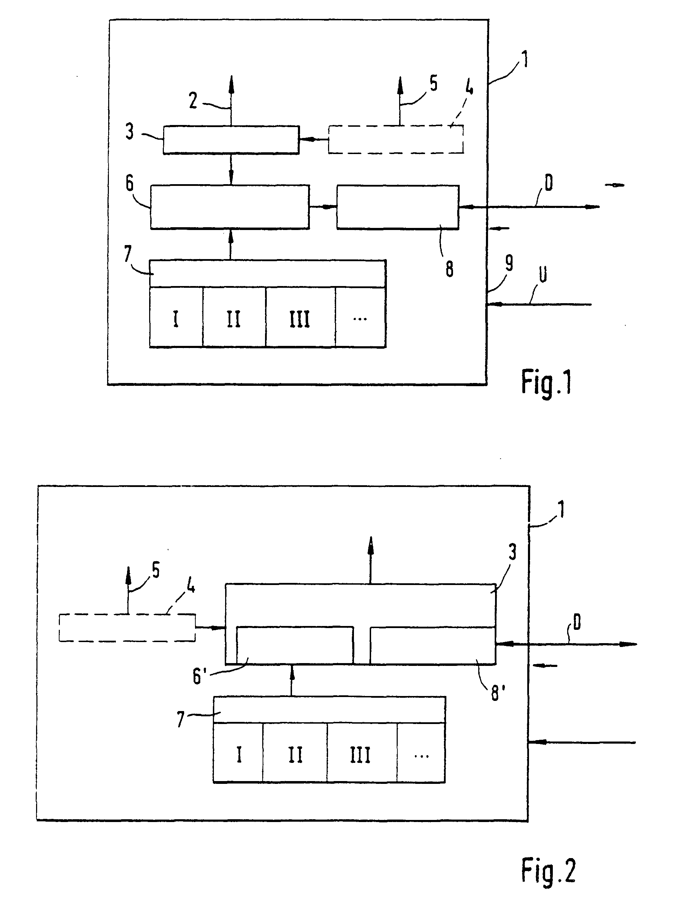

Gemäß Figur 1 ist in einem eigenen Gehäuse 1 eine GPS-Antenne 2 angeordnet, die zum Empfang von Sendesignalen von Satelliten im Global Positioning System (GPS) geeignet ist. An die GPS-Antenne 2 ist ein GPS-Empfänger 3 angeschlossen, in dem die von der GPS-Antenne 2 empfangenen Signale ausgewertet und zu Positionsdaten gebildet werden. Dabei ist es möglich, daß dem GPS-Empfänger 3 Ausgangssignale eines DGPS-Empfängers 4 zur Korrektur der errechneten Positionsdaten zugeleitet werden. Der DGPS-Empfänger 4 erhält seine Signale über eine DGPS-Antenne 5, mit der DGPS-Signale empfangbar sind.

Die vom GPS-Empfänger 3 errechneten Positionsdaten gelangen auf einen Mikroprozessor 6, dem ferner Ausgangssignale von zusätzlichen Sensoren 7 zugeleitet werden. In Figur 1 sind drei Sensoren I, II, III angedeutet, die beispielsweise ein Gyro-Sensor, ein Beschleunigungsmesser, ein barometischer Höhenmesser o.ä. sein können, jedenfalls unabhängig vom Fahrzeugsystem des Kraftfahrzeugs sind.

Der Mikroprozessor 6 kombiniert die Positionsdaten der Sensoren 7 und des GPS-Empfängers 3 und dient als Koppelrechner für die Ermittlung der aktuellen Positionsdaten. Diese gelangen auf eine Schnittstelle 8, über die sie auf einen Navigationsrechner o.ä. übertragbar sind.

Das Gehäuse 1 ist ferner mit einer Anschlußstelle 9 für eine Versorgungsspannung U versehen.

Das in Figur 2 dargestellte Ausführungsbeispiel der Erfindung unterscheidet sich von dem in Figur 1 lediglich darin, daß als Mikroprozessor 6' und als Schnittstelle 8' der Mikroprozessor und die Schnittstelle des GPS-Empfängers 3 ausgenutzt werden.

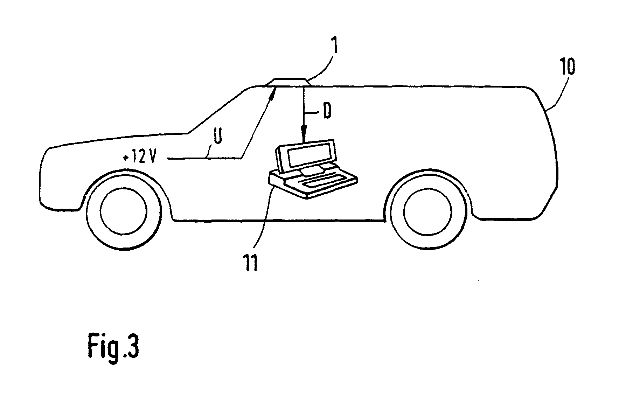

Figur 3 verdeutlicht eine mögliche Anordnung der erfindungsgemäßen Ortungsvorrichtung in einem Gehäuse 1 auf einem Dach eines Kraftfahrzeugs 10. Die erfindungsgemäße Ortungsvorrichtung in dem Gehäuse 1 erhält die Versorgungsspannung U beispielsweise aus der Batterie des Kraftfahrzeugs und leitet Positionsdaten D in das Innere des Kraftfahrzeugs 10, wo die Daten D beispielsweise in einem Standard-PC 11 verarbeitet werden können, der mit der erforderlichen Navigationssoftware und der im Einzelfall benötigten Datenbasis geladen ist.

Als Standard-PC 11 kann beispielsweise ein Laptop, aber auch ein einfacher PC in einem genormten Gehäuse verwendet werden.

## Patentansprüche

1. Fahrzeug-Ortungsvorrichtung für Fahrzeuge (11) mit einem an eine Antenne (2) angeschlossenen Satellitenempfänger (3) zum Empfang und zur Auswertung von von mehreren Satelliten abgestrahlten Sendesignalen, mit zusätzlichen Sensoren (7) für die Erfassung der Bewegung des Fahrzeugs (11) und mit einem Koppelrechner (6, 6') zur gemeinsamen Auswertung der Sendesignale der Satelliten und der Sensorsignale zur Ermittlung von aktuellen Positionsdaten (D), wobei die zusätzlichen Sensoren (7) vom Fahrzeugsystem unabhängige Sensoren (7) sind, **dadurch gekennzeichnet, daß** der Satellitenempfänger (3) mit seiner Antenne (2), mit den zusätzlichen Sensoren (7) und dem Koppelrechner (6, 6') in einem eigenen Gehäuse (1) angeordnet ist, das einen Anschluß (9) für eine Versorgungsspannung (U) und eine Schnittstelle (8, 8') aufweist, über die die Positionsdaten (D) übertragbar sind.

2. Ortungsvorrichtung nach Anspruch 1, **dadurch gekennzeichnet, daß** das Gehäuse (1) zur Anbringung an der Außenseite des Fahrzeugs (11) ausgebildet ist.

3. Ortungsvorrichtung nach Anspruch 1 oder 2, **dadurch gekennzeichnet, daß** zusätzlich eine Antenne (5) zum Empfang und eine Auswertungseinrichtung (4) zur Auswertung von differentiellen Korrekturdaten für die Auswertung der Satellitensignale in das Gehäuse (1) integriert sind.

## Claims

1. Vehicle position-finding apparatus for vehicles (11) having a satellite receiver (3), connected to an antenna (2), for receiving and evaluating transmitted signals radiated from a plurality of satellites, having additional sensors (7) for detecting the motion of the vehicle (11) and having an integrated navigation computer (6, 6') for jointly evaluating the transmitted signals from the satellites and the sensor signals for ascertaining current position data (D), the additional sensors (7) being sensors (7) which are independent of the vehicle system, **characterized in that** the satellite receiver (3) is arranged with its antenna (2), with the additional sensors (7) and with the integrated navigation computer (6, 6') in a separate housing (1) which has a connection (9) for a supply voltage (U) and an interface (8, 8') via which the position data (D) can be transmitted.

2. Position-finding apparatus according to Claim 1, **characterized in that** the housing (1) is designed to be attached to the outside of the vehicle (11).

3. Position-finding apparatus according to Claim 1 or 2, **characterized in that** an antenna (5) for reception and an evaluation device (4) for evaluation of differential correction data for evaluating the satellite signals are additionally integrated in the housing (1).

## Revendications

1. Dispositif de localisation d'un véhicule (11) comprenant un récepteur satellite (3) relié à une antenne (2) pour recevoir et exploiter les signaux d'émissions de plusieurs satellites, avec des capteurs (7) supplémentaires pour détecter le mouvement du véhicule (11) et un calculateur de couplage (6, 6') pour l'exploitation en commun des signaux d'émission des satellites et des signaux de capteurs pour déterminer les données de position actuelle (D), les capteurs supplémentaires (7) étant indépendants du système du véhicule,
**caractérisé en ce que**
le récepteur satellite (3) avec son antenne (2), les capteurs supplémentaires (7) et le calculateur de couplage (6, 6') est logé dans un boîtier distinct (1) comportant un branchement (9) pour une tension d'alimentation (U) et une interface (8, 8') pouvant transmettre les données de position (D).

2. Dispositif de localisation selon la revendication 1,
**caractérisé en ce que**
le boîtier (1) est réalisé pour être fixé au côté extérieur du véhicule (11).

3. Dispositif de localisation selon les revendications 1 ou 2,
**caractérisé en ce qu'**
en plus une antenne (5) pour recevoir et une installation d'exploitation (4) pour exploiter les données de correction différentielles sont intégrées dans le boîtier (1) pour exploiter des signaux satellites,
